# EUROPÄISCHE PATENTSCHRIFT

(11) **EP 2 768 691 B1**
(45) Veröffentlichungstag und Bekanntmachung des Hinweises auf die Patenterteilung: **12.04.2017**
(21) Anmeldenummer: 12725313.6
(22) Anmeldetag: 31.05.2012
(51) Int. Cl.: H02J 7/02, H01F 27/36, H01F 38/14, B60L 11/18

(54) **FAHRZEUG MIT ELEKTROANTRIEB**
VEHICLE WITH ELECTRIC DRIVE TRAIN
VÉHICULE AVEC CHAÎN D'ENTRAINEMENT ÉLECTRIQUE

(30) Priorität: 18.10.2011 DE 102011116253
(43) Veröffentlichungstag der Anmeldung: 27.08.2014
(73) Patentinhaber: Audi AG, 85045 Ingolstadt (DE)
(72) Erfinder: ELIAS, Björn, 85120 Hepberg (DE); OHLEN, Christian, 85080 Gaimersheim (DE); EBNER, Anca, 85088 Vohburg (DE)
(74) Vertreter: Herbst, Matthias Heinz
(86) Internationale Anmeldenummer: PCT/EP2012/002294
(87) Internationale Veröffentlichungsnummer: WO 2013/056755

(56) Entgegenhaltungen:
- EP-A1- 0 552 736
- EP-A2- 0 823 716
- WO-A2-2008/140333
- DE-U1-202010 007 613
- US-A1- 2010 277 121

## Beschreibung

Die Erfindung betrifft ein Fahrzeug mit Elektroantrieb gemäß dem Oberbegriff des Anspruchs 1.

Im Stand der Technik sind Kraftfahrzeuge mit Elektroantrieb, wie beispielsweise Hybridautos und reine Elektroautos bekannt, die Traktionsakkumulatoren für die elektrische Energieversorgung eines Elektromotors umfassen. Diese bekannten Kraftfahrzeuge sind mit einem System zur induktiven Energieübertragung ausgestattet, das auch ein häufiges Nachladen der Akkumulatoren mit hohem Bedienkomfort ermöglicht. Dieses System funktioniert nach Art eines Transformators und umfasst eine Primärtransformatoreinheit, die infrastrukturseitig, beispielsweise an der Rückwand einer Garage angebracht ist, und eine Sekundärtransformatoreinheit, die an der Front des Kraftfahrzeugs hinter dem vorderen Nummernschild integriert ist.

Die Druckschrift DE 24 34 890 B1 betrifft eine Vorrichtung zum Verbinden eines in einem Kraftfahrzeug angeordneten Ladegerätes mit einem Wechsel- oder Drehstromnetz und bildet die Basis für den Oberbegriff des Anspruchs 1. Diese Druckschrift offenbart ein mittels elektrischem nachladbaren Energiespeicher antreibbares Kraftfahrzeug mit einer Vorrichtung zum Verbinden eines in dem Kraftfahrzeug angeordneten Ladegerätes mit einem Wechsel- oder Drehstromnetz eines Energieversorgungsunternehmens an einem Stillstandsplatz. Diese Vorrichtung besteht aus einem geteilten Transformator, dessen die Primärwicklungen aufweisendes Teil am Stillstandsplatz mit dem Stromnetz und dessen die Sekundärwicklungen aufweisendes Teil im Kraftfahrzeug mit dem Ladegerät verbunden ist. Die einander zugeordneten Primärwicklungen und Sekundärwicklungen sind auf einem Kern hintereinander angeordnet. Die beiden Transformatorteile sind durch Teilung des Kernes gebildet. Das dem Kraftfahrzeug zugeordnete Transformatorteil ist in einer vorderen Stossstange des Kraftfahrzeugs und das dem Stillstandsplatz zugeordnete Transformatorteil in einer horizontalen Ladeplanke des Stillstandsplatzes angeordnet. Sowohl das dem Kraftfahrzeug zugeordnete Transformatorteil in der Stossstange und die Stossstange als auch das dem Stillstandsplatz zugeordnete Transformatorteil in der Ladeplanke sind mittels Schraubenfedern federnd gelagert, um eine luftspaltfreie Ankupplung der beiden Transformatorteile zu ermöglichen.

Da die bekannte Vorrichtung, insbesondere dessen dem Kraftfahrzeug zugeordnete Transformatorteil, beim Ladevorgang elektromagnetische Strahlung abgibt, kann diese eine Bordelektronik des Fahrzeugs stören.

Aus dem Dokument DE 24 34 890 B1 ist ein Lastkraftwagen mit einem elektrischen Energiespeicher bekannt, welcher über einen Transformator mit elektrischer Energie aufgeladen werden kann. Der Transformator wird dabei einerseits durch fahrzeugseitige Spulen und andererseits durch an einem Stillstandsplatz angeordnete Spulen gebildet, welche mit einem Wechselstromnetz oder aber Drehstromnetz eines Energieversorgungsunternehmens elektrisch verbunden sind.

Ein Kraftfahrzeug ist außerdem aus dem Dokument DE 10 2009 060 177 A1 als bekannt zu entnehmen.

Die Druckschrift US2010277121 wird als nächstliegender Stand der Technik angesehen und offenbart die Merkmale der Präambel des unabhängigen Anspruchs 1.

Die Aufgabe der Erfindung besteht darin, ein Fahrzeug mit Elektroantrieb gemäß dem Oberbegriff des Anspruchs 1 in Hinblick auf Störung durch elektromagnetische Strahlung zu verbessern.
Diese Aufgabe wird durch ein Fahrzeug mit Elektroantrieb gemäß Anspruch 1 gelöst. Weitere Ausführungsformen sind in den Unteransprüchen beschrieben.

Die Erfindung schlägt ein Fahrzeug mit Elektroantrieb vor, welches ein Deformationselement zum Schutz von Fußgängern aufweist, welches aus Schaumstoff ausgebildet ist, wobei das Fahrzeug auch eine Sekundärtransformatoreinheit zum transformatorischen Aufladen eines Energiespeichers mit elektrischer Energie sowie ein als Platte ausgebildetes Abschirmelement gegen eleltromagnetische Strahlung umfasst, welches zum Verhindern einer Ausbreitung von elektromagnetischer Strahlung in das Fahrzeug hinein ausgebildet ist, und wobei das Deformationselement zwischen der Sekundärtransformatoreinheit einerseits und dem Abschirmelement andererseits angeordnet ist.

Dieses Abschirmelement kann nach Bedarf einfach derart, insbesondere in der Nähe der Sekundärtransformatoreinheit, angeordnet werden, dass es die Ausbreitung von elektromagnetischer Strahlung, die von der Sekundärtransformatoreinheit abgegeben wird, insbesondere in das Fahrzeug hinein oder in Fahrtrichtung nach hinten oder nach vorn verhindert, und dadurch die Störung einer Bordelektronik und anderer elektronischer Bauteile des Fahrzeugs verringern, die in Fahrtrichtung weiter hinten beziehungsweise weiter vorn liegen.

Es kann vorgesehen sein, dass wenigstens eines der Abschirmelemente zwischen der Sekundärtransformatoreinheit und dem Deformationselement angeordnet ist und/oder dass wenigstens eines der Deformationselemente zwischen der Sekundärtransformatoreinheit und dem Abschirmelement angeordnet ist.

Dies bietet flexible Montagemöglichkeiten für die Abschirmelemente und die Deformationselemente in Abhängigkeit von den jeweiligen Gegebenheiten.

Da bei der aus DE 24 34 890 B1 bekannten Vorrichtung das dem Kraftfahrzeug zugeordnete Transformatorteil an einer vorderen Stossstange des Fahrzeugs angebracht ist, muss es in einem Bereich des Fahrzeugs integriert werden, der einen hohen Einfluss auf das Crashverhalten bei Fußgängerunfällen bei Vorwärtsfahrt hat. Insbesondere wird der Frontbereich des Fahrzeugs durch die zusätzlich zu montierenden Bauteile, insbesondere den üblicherweise aus Elektroblechen oder Ferrit bestehenden Halbtrafokern, härter, jedoch ist eine möglichst gut definierte und weiche Fahrzeugfront notwendig, um das Verletzungsrisiko von Fußgängern minimal zu halten. Da das bekannte, dem Kraftfahrzeug zugeordnete Transformatorteil an der vorderen Stoßstange montiert wird, bleibt weniger Bauraum für Deformationselemente, die zwischen Stoßstange und Fahrgastzelle angeordnet sind, übrig, sodass deren Dicke, also deren Ausdehnung in Fahrtrichtung, reduziert werden muss. Dies führt zu einer weiteren Erhöhung der Härte der Fahrzeugfront.

Falls bei dem vorgeschlagenen Fahrzeug ein Deformationselement zwischen der Sekundärtransformatoreinheit und dem Abschirmelement, insbesondere an der Front oder am Heck des Fahrzeugs, angeordnet ist, befindet sich das Abschirmelement vorteilhafterweise außerhalb des Bereichs mit direktem Einfluss auf das Crashverhalten bei Fußgängerunfällen bei Vorwärtsfahrt beziehungsweise Rückwärtsfahrt und insbesondere in größerem Abstand zu der Front beziehungsweise dem Heck.

Es kann vorgesehen sein, dass
- wenigstens eines der Deformationselemente an einer Front des Fahrzeugs angeordnet ist;
- wenigstens eine der Sekundärtransformatoreinheiten an der Front in Fahrtrichtung vor dem Deformationselement angeordnet ist;
- wenigstens eines der Abschirmelemente an der Front in Fahrtrichtung hinter der Sekundärtransformatoreinheit angeordnet ist.

Da ein Abschirmelement hinter der Sekundärtransformatoreinheit angeordnet ist, verhindert es die Ausbreitung von elektromagnetischer Strahlung, die von der Sekundärtransformatoreinheit abgegeben wird, entgegen der Fahrtrichtung nach hinten in das Fahrzeug hinein und verringert die Störung einer Bordelektronik und anderer elektronischer Bauteile des Fahrzeugs, die entgegen der Fahrtrichtung weiter hinten liegen.

Es kann vorgesehen sein, dass
- wenigstens eines der Deformationselemente an einem Heck des Fahrzeugs angeordnet ist;
- wenigstens eine der Sekundärtransformatoreinheiten an dem Heck in Fahrtrichtung hinter dem Deformationselement angeordnet ist;
- wenigstens eines der Abschirmelemente an dem Heck in Fahrtrichtung vor der Sekundärtransformatoreinheit angeordnet ist.

Da ein Abschirmelement vor der Sekundärtransformatoreinheit angeordnet ist, verhindert es die Ausbreitung von elektromagnetischer Strahlung, die von der Sekundärtransformatoreinheit abgegeben wird, entgegen der Fahrtrichtung nach vorne in das Fahrzeug hinein und verringert die Störung einer Bordelektronik und anderer elektronischer Bauteile des Fahrzeugs, die entgegen der Fahrtrichtung weiter vorne liegen.

Es kann vorgesehen sein, dass wenigstens eines der Abschirmelemente wenigstens eine Platte aus einem elektrisch leitfähigen Material und/oder wenigstens eine Lochplatte aus einem elektrisch leitfähigen Material und/oder wenigstens ein Gitter aus einem elektrisch leitfähigen Material und/oder wenigstens ein Netz aus einem elektrisch leitfähigen Material und/oder wenigstens eine Folie aus einem elektrisch leitfähigen Material umfasst.

Die Platte kann beispielsweise ein Blech oder eine Folie aus Metall sein. Jedes elektrisch leitfähige Material kann nach Bedarf beliebig gewählt werden und enthält beispielsweise wenigstens ein Metall und/oder Kohlenstoff und/oder wenigstens einen elektrisch selbstleitenden oder intrinsisch leitenden Kunststoff und/oder wenigstens ein elektrisch leitfähiges Kunststoffgemisch. Das Metall kann beispielsweise Aluminium oder Kupfer oder eine Legierung mit Aluminium oder Kupfer sein. Der elektrisch selbstleitende oder intrinsisch leitende Kunststoff kann beispielsweise Polyanilin (PAni), Polypyrrol (PPy) oder Polythiophen (PT) sein. Das elektrisch leitfähige Kunststoffgemisch enthält beispielsweise wenigstens einen Kunststoff, insbesondere Acrylnitril-Butadien-Styrol (ABS), Polyamid (PA), Polyaryletherketone (PAEK), Polylactide (PLA), Polycarbonat (PC), Polyethylen (PE), Polyethylenterephthalat (PET), Polymethylmethacrylat (PMMA), Polypropylen (PP), Polystyrol (PS), Polyurethan (PU), Polyvinylchlorid (PVC), Aminoplast oder Phenoplast, und darin verteilten Leitruß.

Ein Abschirmelement, das keine massive Metallplatte, sondern lediglich eine Lochplatte und/oder ein Gitter und/oder ein Netz und/oder eine Folie umfasst, ist im Vergleich zu einem Abschirmelement mit einer massiven Metallplatte weniger stabil und kann bei einem Aufprall in Fahrtrichtung auf einen Fußgänger leicht deformiert, insbesondere verbogen oder zerbrochen werden.

Es kann vorgesehen sein, dass wenigstens eines der Deformationselemente zumindest teilweise aus wenigstens einem Schaumstoff hergestellt ist.

Ein derartiges Deformationselement ermöglicht ein besonders niedriges Verletzungsrisiko für Fußgänger.

Jedes vorgeschlagene Fahrzeug kann weiter umfassen ein vorderes Kennzeichenschild, das in Fahrtrichtung vor einer an der Front angeordneten Sekundärtransformatoreinheit angeordnet ist, und/oder ein hinteres Kennzeichenschild, das in Fahrtrichtung hinter einer an dem Heck angeordneten Sekundärtransformatoreinheit angeordnet ist.

Es kann vorgesehen sein, dass die Sekundärtransformatoreinheit im Wesentlichen plattenförmig ist und beispielsweise eine Dicke in einer x-Richtung, eine Breite in einer y-Richtung und eine Höhe in einer z-Richtung hat, wobei die Dicke kleiner als die Höhe und die Höhe kleiner als die Breite ist. Dabei entspricht die x-Richtung der Fahrt- oder Längsrichtung des Fahrzeugs, die y-Richtung der Querrichtung des Fahrzeugs und die z-Richtung der Vertikalrichtung des Fahrzeugs.

Eine derartige, im wesentlicher plattenförmige Sekundärtransformatoreinheit kann bei einem Aufprall in x-Richtung leicht deformiert, insbesondere verbogen oder durchgebrochen werden und benötigt wenig Bauraum zwischen Stoßstange und Fahrgastzelle, sodass die in diesem, für das Crashverhalten wichtigen Bereich zu montierenden Schaumstoff-Deformationselemente eine größere Dicke haben können.

Im Folgenden werden Ausführungsformen der Erfindung beispielhaft anhand der beigefügten Zeichnungen näher erläutert werden. Die daraus hervorgehenden einzelnen Merkmale sind jedoch nicht auf die einzelnen Ausführungsformen beschränkt, sondern können mit weiter oben beschriebenen einzelnen Merkmalen und/oder mit einzelnen Merkmalen anderer Ausführungsformen verbunden werden. Die Einzelheiten in den Zeichnungen sind nur erläuternd, nicht aber beschränkend auszulegen. Die in den Ansprüchen enthaltenen Bezugszeichen sollen den Schutzbereich der Erfindung in keiner Weise beschränken, sondern verweisen lediglich auf die in den Zeichnungen gezeigten Ausführungsformen.

Die Zeichnungen zeigen in:
- Fig. 1: eine Vorderansicht einer Sekundärtransformatoreinheit, die an einer Front eines Fahrzeugs mit Elektroantrieb angeordnet werden kann;
- Fig. 2: die Draufsicht zu der Fig. 1; und
- Fig. 3: eine Vorderansicht eines Fahrzeugs mit Elektroantrieb in einer bevorzugten Ausführungsform.

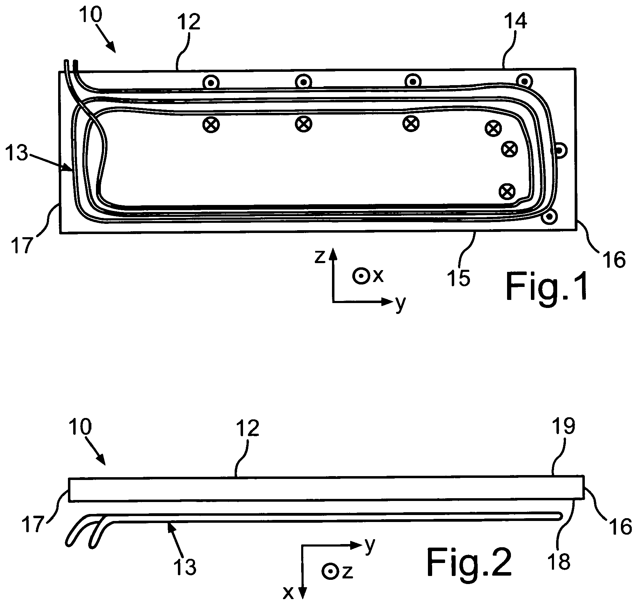

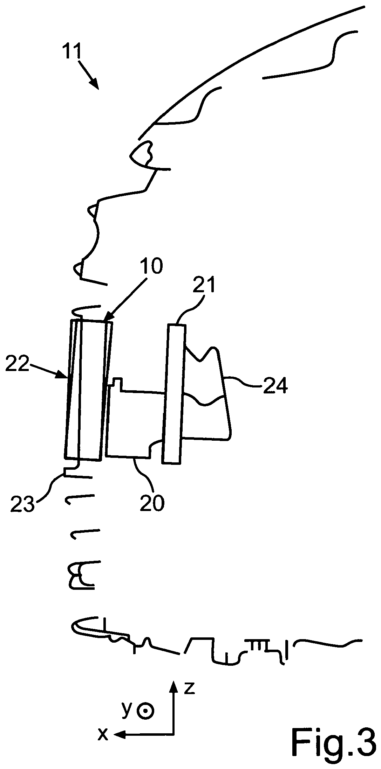

In den Fig. 1 und 2 ist eine Sekundärtransformatoreinheit 10 in einer bevorzugten Ausführungsform zur Anbringung an einem erfindungsgemäßen Fahrzeug 11 mit Elektroantrieb (Fig. 3) schematisch dargestellt. Diese Sekundärtransformatoreinheit 10 umfasst einen Sekundärkern 12 und eine Sekundärspule 13, die an dem Sekundärkern 12 angeordnet ist.

Bei dieser bevorzugten Ausführungsform ist der Sekundärkern 12 plattenförmig ausgebildet, besteht aus Ferrit, und hat eine Oberseite 14, eine Unterseite 15, eine linke Seite 16, eine rechte Seite 17, eine Vorderseite 18 und eine Rückseite 19. Die Oberseite 14 und die Unterseite 15 begrenzen den Sekundärkern 12 in einer z-Richtung, die in der Fig. 1 nach oben und in der Fig. 2 nach vorne aus der Papierebene heraus zeigt. Die linke Seite 16 und die rechte Seite 17 begrenzen den Sekundärkern 12 in einer y-Richtung, die in den Fig. 1 und 2 nach rechts zeigt. Die Vorderseite 18 und die Rückseite 19 begrenzen den Sekundärkern 12 in einer x-Richtung, die in der Fig. 1 nach vorne aus der Papierebene heraus und in der Fig. 2 nach unten zeigt. Dabei entspricht die x-Richtung der Fahrt- oder Längsrichtung des Fahrzeugs 11, die y-Richtung der Querrichtung des Fahrzeugs 11 und die z-Richtung der Vertikalrichtung des Fahrzeugs 11. Außerdem hat der Sekundärkern 12 in y-Richtung eine Breite, die dem Abstand zwischen der linken Seite 16 und der rechten Seite 17 entspricht, in z-Richtung eine Höhe, die dem Abstand zwischen der Oberseite 14 und der Unterseite 15 entspricht und deutlich keiner als die Breite ist, und in x-Richtung eine Dicke, die dem Abstand zwischen der Vorderseite 18 und der Rückseite 19 entspricht und deutlich kleiner als die Höhe ist.

Bei dieser bevorzugten Ausführungsform ist die Sekundärspule 13 in drei im Wesentlichen rechteckigen Windungen an der Vorderseite 18 des Sekundärkerns 12 angeordnet. Eine nicht dargestellte Primärtransformatoreinheit, die einen Primärkern und eine an diesem angeordnete Primärspule umfasst, ist derart ausgebildet, dass sie, wenn sie mit geringem Abstand vor der Vorderseite 18 platziert wird und ihre Primärspule von einem Wechselstrom durchflossen wird, ein Magnetfeld erzeugt, dessen Feldlinien in der Fig. 1 durch die Kreise mit Punkt und die Kreise mit Kreuz angedeutet ist. Feldlinien treten beispielsweise an den durch die Kreise mit Kreuz markierten Stellen auf der Vorderseite 18 in den Sekundärkern 12 ein und an den durch die Kreise mit Punkt markierten Stellen aus dem Sekundärkern 12 heraus und verlaufen in dem Sekundärkern 12 von den Kreisen mit Kreuz zu den Kreisen mit Punkt. Somit umschließen diese Feldlinien die Windungen der Sekundärspule 13 und induzieren dort eine Wechselspannung, die an ein nicht dargestelltes Hochspannungsbordnetz des Fahrzeugs 11 zum Aufladen seiner Traktionsakkumulatoren angelegt wird.

Bei dieser bevorzugten Ausführungsform sind die Windungen der Sekundärspule 13 auf die Vorderseite 18 des Sekundärkerns 12 geklebt.

In der Fig. 3 ist die Front eines erfindungsgemäßen Fahrzeugs 11 mit Elektroantrieb in einer bevorzugten Ausführungsform in Gestalt eines Hybridautos schematisch dargestellt. Dieses Fahrzeug 11 umfasst eine Sekundärtransformatoreinheit 10 in der bevorzugten Ausführungsform, ein Deformationselement 20 aus Schaumstoff, ein Abschirmelement 21 in Gestalt einer Lochplatte aus Aluminium, ein vorderes Kennzeichenschild 22, eine vordere Stoßstange 23 und einen Querträger 24.

Bei dieser bevorzugten Ausführungsform ist die Sekundärtransformatoreinheit 10 an der Front des Fahrzeugs 11 angeordnet, indem sie mit der Rückseite 19 an der in x-Richtung nach vorn weisenden Vorderseite der Stoßstange 23 befestigt ist. Außerdem ist das Kennzeichenschild 22 in x-Richtung vor der Sekundärtransformatoreinheit 10 angeordnet, indem es mit seiner entgegen der x-Richtung nach hinten weisenden Rückseite an der Vorderseite 18 befestigt ist. Dabei ist das Kennzeichenschild 22 derart angeordnet und sind die Windungen der Sekundärspule 13 derart auf der Vorderseite 18 verlegt, dass das Kennzeichenschild 22 an der von der Sekundärspule 13 umschlossenen Teilfläche dieser Vorderseite 18 anliegt und die Sekundärspule 13 um das Kennzeichenschild 22 herumläuft ohne es zu berühren.

Bei dieser bevorzugten Ausführungsform ist die Sekundärtransformatoreinheit 10 in Fahrtrichtung direkt vor dem Deformationselement 20 und das Abschirmelement 21 in Fahrtrichtung direkt hinter der Sekundärtransformatoreinheit 10 angeordnet, so dass das Deformationselement 20 zwischen der Sekundärtransformatoreinheit 10 und dem Abschirmelement 21 angeordnet ist. Das Abschirmelement 21 ist mit seiner entgegen der x-Richtung nach hinten weisenden Rückseite an der in x-Richtung nach vorn weisenden Vorderseite des Querträgers 24 befestigt.

## Patentansprüche

1. Fahrzeug (11) mit Elektroantrieb, umfassend
- wenigstens ein Deformationselement (20) zum Schutz von Fußgängern, welches aus Schaumstoff ausgebildet ist;
- wenigstens eine Sekundärtransformatoreinheit (10) zum transformatorischen Aufladen eines Energiespeichers des Fahrzeugs mit elektrischer Energie; und
- wenigstens ein als Platte ausgebildetes Abschirmelement (21) gegen elektromagnetische Strahlung, welches zum Verhindern einer Ausbreitung einer von der Sekundärtransformatoreinheit (10) abgegebenen elektromagnetischen Strahlung in das Fahrzeug hinein ausgebildet ist und dadurch die Störung einer Bordelektronik und anderer elektronischer Bauteile des Fahrzeugs verringert, **dadurch gekennzeichnet, dass**
- das Deformationselement (20) an einer Front des Fahrzeugs (11) angeordnet ist;
- das Deformationselement (20) zwischen der Sekundärtransformatoreinheit (10) und dem Abschirmelement (21) angeordnet ist und hierbei die Sekundärtransformatoreinheit (10) an der Front in Fahrtrichtung direkt vor dem Deformationselement (20) angeordnet ist und das Abschirmelement (21) an der Front in Fahrtrichtung direkt hinter der Sekundärtransformatoreinheit (10) angeordnet ist; und
- das Abschirmelement (21) mit seiner entgegen der Fahrtrichtung nach hinten weisenden Rückseite an einer in Fahrtrichtung nach vorn weisenden Vorderseite eines Querträgers (24) befestigt ist.

2. Fahrzeug (11) nach Anspruch 1, wobei
- wenigstens eines der Deformationselemente (20) an einem Heck des Fahrzeugs (11) angeordnet ist;
- wenigstens eine der Sekundärtransformatoreinheiten (10) an dem Heck in Fahrtrichtung hinter dem Deformationselement (20) angeordnet ist;
- wenigstens eines der Abschirmelemente (21) an dem Heck in Fahrtrichtung vor der Sekundärtransformatoreinheit (10) angeordnet ist.

3. Fahrzeug (11) nach einem der vorherigen Ansprüche, wobei das Abschirmelement (21) eine Lochplatte aus einem elektrisch leitfähigen Material und/oder wenigstens ein Gitter aus einem elektrisch leitfähigen Material und/oder wenigstens ein Netz aus einem elektrisch leitfähigen Material und/oder wenigstens eine Folie aus einem elektrisch leitfähigen Material um-fasst.

4. Fahrzeug (11) nach einem der vorherigen Ansprüche, weiter umfassend
- ein vorderes Kennzeichenschild (22), das in Fahrtrichtung vor einer an der Front angeordneten Sekundärtransformatoreinheit (10) angeordnet ist,
- und/oder ein hinteres Kennzeichenschild, das in Fahrtrichtung hinter einer an dem Heck angeordneten Sekundärtransformatoreinheit (10) angeordnet ist.

## Claims

1. Vehicle (11) with an electric drive, comprising
- at least one deformation unit (20) for protecting pedestrians, which is formed from foam;
- at least one secondary transformer unit (10) for transformational charging of an energy storage unit of the vehicle with electrical energy; and
- at least one element (21) for screening against electromagnetic radiation, which is formed as a plate and is configured in order to prevent propagation of electromagnetic radiation emitted by the secondary transformer unit (10) into the vehicle and thereby reduces interference of on-board electronics and other electronic components of the vehicle,
**characterised in that**
- the deformation unit (20) is arranged on a front (11) of the vehicle;
- the deformation unit (20) is arranged between the secondary transformer unit (10) and the screening element (21), the secondary transformer unit (10) being arranged at the front directly before the deformation element (20) in the driving direction and the screening element (21) being arranged at the front directly behind the secondary transformer unit (10) in the driving direction; and
- the screening element (21) is fastened with its rear side, facing backwards counter to the driving direction, on a front side, facing forwards in the driving direction, of a transverse support (24).

2. Vehicle (11) according to Claim 1, wherein
- at least one of the deformation elements (20) is arranged on a rear of the vehicle (11);
- at least one of the secondary transformer units (10) is arranged on the rear, behind the deformation element (20) in the driving direction;
- at least one of the screening elements (21) is arranged on the rear, before the secondary transformer unit (10) in the driving direction.

3. Vehicle (11) according to any one of the preceding claims, wherein the screening element (21) comprises a perforated plate made of an electrically conductive material and/or at least one grid made of an electrically conductive material and/or at least one mesh made of an electrically conductive material and/or at least one sheet made of an electrically conductive material.

4. Vehicle (11) according to any one of the preceding claims, furthermore comprising
- a front number plate (22), which is arranged before a secondary transformer unit (10) arranged at the front,
- and/or a rear number plate, which is arranged, in the driving direction, behind a secondary transformer unit (10) arranged on the rear.

## Revendications

1. Véhicule (11) avec moteur électrique, comprenant
- au moins un élément de déformation (20) qui est destiné à protéger des piétons et qui est constitué de mousse ;
- au moins une unité de transformateur secondaire (10) pour charger par transformateur une batterie du véhicule en énergie électrique; et
- au moins un élément de protection (21) contre le rayonnement électromagnétique qui est conçu sous la forme d'une plaque et qui est destiné à empêcher une propagation d'un rayonnement électromagnétique produit par l'unité de transformateur secondaire (10) jusque dans le véhicule et à réduire ainsi la perturbation d'une électronique de bord et d'autres composants électroniques du véhicule ;
**caractérisé en ce que**
- l'élément de déformation (20) est agencé à l'avant du véhicule (11) ;
- l'élément de déformation (20) est agencé entre l'unité de transformateur secondaire (10) et l'élément de protection (21), l'unité de transformateur secondaire (10) est alors agencée à l'avant, dans le sens de déplacement, directement devant l'élément de déformation (20) et l'élément de protection (21) est agencé à l'avant, dans le sens de déplacement, directement derrière l'unité de transformateur secondaire (10) ; et
- l'élément de protection (21) est fixé avec sa face arrière regardant vers l'arrière à l'opposé du sens de déplacement au niveau d'une face avant, regardant vers l'avant dans le sens de déplacement, d'une traverse (24).

2. Véhicule (11) selon la revendication 1, dans lequel
- au moins l'un des éléments de déformation (20) est agencé à l'arrière du véhicule (11) ;
- au moins l'une des unités de transformateur secondaires (10) à l'arrière est agencée, dans le sens de déplacement, derrière l'élément de déformation (20) ;
- au moins l'un des éléments de protection (21) à l'arrière est agencé, dans le sens de déplacement, devant l'unité de transformateur secondaire (10).

3. Véhicule (11) selon l'une des revendications précédentes, dans lequel l'élément de protection (21) comprend une plaque perforée en un matériau électriquement conducteur et/ou au moins une grille en un matériau électriquement conducteur et/ou au moins un treillis en un matériau électriquement conducteur et/ou au moins un film en un matériau électriquement conducteur.

4. Véhicule (11) selon l'une des revendications précédentes, comprenant en outre
- une plaque d'immatriculation avant (22) qui est agencée, dans le sens de déplacement, devant une unité de transformateur secondaire (10) agencée à l'avant,
- et/ou une plaque d'immatriculation arrière qui est agencée, dans le sens de déplacement, derrière une unité de transformateur secondaire (10) agencée à l'arrière.
